# EUROPÄISCHE PATENTSCHRIFT

(11) **EP 3 470 338 B1**
(45) Veröffentlichungstag und Bekanntmachung des Hinweises auf die Patenterteilung: **02.11.2022**
(21) Anmeldenummer: 18194662.5
(22) Anmeldetag: 14.09.2018
(51) Int. Cl.: B64D 27/20, B64D 27/26

(54) **STRAHLTRIEBWERK MIT EINER ANBINDUNGSVORRICHTUNG**
JET ENGINE COMPRISING A CONNECTION DEVICE
MOTEUR À RÉACTION DOTÉ D'UN DISPOSITIF DE CONNEXION

(30) Priorität: 16.10.2017 DE 102017124043
(43) Veröffentlichungstag der Anmeldung: 17.04.2019
(73) Patentinhaber: Rolls-Royce Deutschland Ltd & Co KG, 15827 Blankenfelde-Mahlow (DE)
(72) Erfinder: Venter, Gideon, 15827 Blankenfelde-Mahlow (DE); Schacht, Michael, 15827 Blankenfelde-Mahlow (DE)
(74) Vertreter: Kronthaler, Wolfgang N.K.

(56) Entgegenhaltungen:
- EP-A2- 2 568 143
- DE-A1- 2 549 771
- GB-A- 1 136 584
- US-A- 4 044 973
- US-A1- 2011 197 595

## Beschreibung

Die Erfindung betrifft ein Strahltriebwerk mit einer Anbindungsvorrichtung zur Anbindung des Strahltriebwerks an einem Element eines Flugzeugs gemäß der im Oberbegriff des Patentanspruchs 1 näher definierten Art und ein Flugzeug mit einem derartigen Strahltriebwerk gemäß der im Oberbegriff des Patentanspruches 8 näher definierten Art.

Aus der Praxis ist die Anordnung von Strahltriebwerken an einem Flugzeugrumpf in verschiedenen Konfigurationen hinlänglich bekannt, wobei Strahltriebwerke in der Regel einer bestimmten Flugzeugseite zugeordnet sind.

Hierfür sind bei bekannten Strahltriebwerken zwei separate Triebwerksaufhängungsschnittstellen vorgesehen, mittels denen die Montage derartiger Strahltriebwerke auf beiden Flugzeugseiten gewährleistet werden kann.

Aus der US 4,044,973 A ist ein Triebwerk bekannt, welches an unterschiedlichen Anbindungspunkten sowohl auf der rechten Seite als auch auf der linken Seite und am Heck eines Flugzeugs angeordnet werden kann. Zur Umsetzung der Lösung der US 4,044,973 A müssen jedoch nachteilhafterweise mehrere Schnittstellen zum Flugzeug vorgesehen werden, um die umfangsseitige Ausrichtung des Triebwerks mit identischer Anordnung von Lagerkammern, Rohrleitungen und dergleichen in unterschiedlichen Positionen an dem Flugzeug beibehalten zu können.

Eine derartige Ausführung eines Triebwerks ist insbesondere bei einer seitlichen Anbindung an einem Flugzeugrumpf auf verschiedenen Flugzeugseiten schwierig zu gestalten. Aus der GB 1 136 584 A sind Antriebssysteme bekannt, die jeweils für den Antrieb von Hilfsgeräten von Gasturbinentriebwerken und zum Starten von Gasturbinentriebwerken vorgesehen sind.

Eine Flugzeugtriebwerksanordnung mit einem Befestigungsmechanismus eines Turbojets an einer starren Struktur einer Montagestrebe ist aus der US 2011 /0 197 595 A1 bekannt.

Des Weiteren beschreibt die DE 25 49 771 A1 ein Gasturbinentriebwerk mit vom Triebwerk angetriebenen Zubehörteilen.

Der vorliegenden Erfindung liegt die Aufgabe zugrunde, ein Strahltriebwerk zur Verfügung zu stellen, das auf einfache und flexible Weise an unterschiedlichen Positionen am Flugzeug angeordnet werden kann. Der vorliegenden Erfindung liegt weiterhin die Aufgabe zugrunde, ein Flugzeug mit einem derartigen Stahltriebwerk zur Verfügung zu stellen.

Erfindungsgemäß wird diese Aufgabe mit einem Strahltriebwerk mit den Merkmalen des Patentanspruchs 1 gelöst.

Es wird ein Strahltriebwerk vorgeschlagen mit einer Anbindungsvorrichtung zur Anbindung des Strahltriebwerks an einem Element eines Flugzeugs, insbesondere einem Triebwerkspylon, einem Flugzeugrumpf und/oder einem Flugzeugflügel, wahlweise in einer ersten Montageposition und wenigstens einer zweiten Montageposition und mit wenigstens einer Betriebsmitteleinrichtung, welche einen ersten Fluidbereich und einen zweiten Fluidbereich aufweist, wobei in der ersten Montageposition der erste Fluidbereich einer ersten Funktionalität und der zweite Fluidbereich einer zweiten Funktionalität zugeordnet ist. Erfindungsgemäß ist vorgesehen, dass in der zweiten Montageposition die Fluidbereiche der jeweils anderen Funktionalität zugeordnet sind.

Ein erfindungsgemäß ausgeführtes Strahltriebwerk hat den Vorteil, dass es mit einer einzigen Anbindungsvorrichtung auf einfache und flexible Weise an unterschiedlichen Positionen an einem Flugzeug, beispielsweise auf einer linken Flugzeugseite und einer rechten Flugzeugseite, oberhalb oder unterhalb eines Flugzeugflügels, an einem Flugzeugrumpf oder an einem Triebwerkspylon durch eine entsprechende Verdrehung des Strahltriebwerks angeordnet werden kann.

Es können mit der Erfindung vorteilhafterweise grundsätzlich baugleich ausgeführte Strahltriebwerke eingesetzt werden, um diese auf verschiedenen Seiten des Flugzeugs mit insbesondere voneinander abweichenden Anbindungswinkeln an dem Flugzeug anzubinden. Zudem kann ein auf einer Seite des Flugzeugs angebundenes Strahltriebwerk mit geringem Arbeitsaufwand schnell auch auf der anderen Seite des Flugzeugs angebunden werden.

Da die verschiedenen Fluidbereiche die Funktionalität des jeweils anderen Fluidbereichs übernehmen können, ist insbesondere eine einfache links/rechts-Austauschbarkeit des Strahltriebwerks bei einer seitlichen Anbindung an das Flugzeug mit entsprechender Verdrehung des Triebwerks möglich. Bei herkömmlichen Triebwerken würde ein solcher Austausch ein "auf den Kopf"-Stellen des Triebwerks mit einem entsprechenden Versagen des Hydrauliksystems bedeuten.

Zweckmäßigerweise sind die Fluidbereiche als Funktionalitäten wechselweise einer Rückführung (scavenge/drain) und einer Entlüftung (vent) zugeordnet. Sowohl die erforderlichen Leitungen zur Ölrückführung als auch die zur Entlüftung können sich somit bei verdrehter Anordnung des Strahltriebwerks in einer im Wesentlichen spiegelsymmetrischen Position zu einem auf einer anderen Seite des Flugzeugs angeordneten Strahltriebwerk befinden. Hierdurch können die Leitungen unabhängig von der Anordnung des Strahltriebwerks in einer für ihre Funktionalität optimalen Position angeordnet werden.

Bei einer vorteilhaften Ausführung weisen die Fluidbereiche in Umfangsrichtung des Strahltriebwerks zueinander beabstandet angeordnete Leitungsbereiche auf, wobei die Leitungsbereiche in Umfangsrichtung des Strahltriebwerks im Wesentlichen symmetrisch zu der Anbindungsvorrichtung angeordnet sind.

Die Anbindungsvorrichtung kann wenigstens zwei Triebwerksbefestigungspunkte aufweisen, wobei die Anbindungsvorrichtung im Bereich der Triebwerksbefestigungspunkte zweckmäßigerweise mit einem Bläsergehäuse verbunden ist. Der Begriff "Triebwerksbefestigungspunkt" ist dabei in seinem weitesten Sinne als örtlich konzentrierte Befestigungseinrichtung zu verstehen. Definierte Befestigungspunkte erleichtern weiter die Montierbarkeit des Triebwerks an unterschiedlichen Montagepositionen am Flugzeug, da sie die erforderliche Rotation des Triebwerks zwischen den Montagepositionen vorgeben und eine schnelle und präzise Ausrichtung des Triebwerks bei der Montage ermöglichen.

Die Triebwerksbefestigungspunkte können in Umfangsrichtung vergleichbar zu den Leitungen der Fluidbereiche im Wesentlichen symmetrisch zu der Anbindungsvorrichtung angeordnet sein. Auch eine Nutzlastverkleidung bzw. Stromlinienverkleidung, ein sogenanntes Splitter-Fairing, in dessen Bereich Kabinenluft und andere Features, die eine Verbindung zum Triebwerkskern aufweisen, können hier angeordnet sein.

Vorzugsweise weist die Anbindungsvorrichtung in Umfangsrichtung insbesondere wenigstens annähernd mittig zu den zwei Triebwerksbefestigungspunkten eine Schnittstelleneinrichtung zum Flugzeug auf. Über die beispielsweise flanschartige Schnittstelleneinrichtung können wie über einen Kanal alle nötigen Verbindungen zwischen dem Strahltriebwerk und dem Flugzeug geführt werden.

Bei einer vorteilhaften Weiterbildung eines erfindungsgemäßen Strahltriebwerks sind in Umfangsrichtung des Strahltriebwerks verteilt wenigstens zwei zur Montage des Strahltriebwerks ausgeführte Hebepunkte vorgesehen, wobei die Hebepunkte in Umfangsrichtung symmetrisch zu der Schnittstelleneinrichtung angeordnet sind und insbesondere in ihrer Funktionalität austauschbar ausgeführt sind. Hierdurch ist ein Ein- und Ausbau des Strahltriebwerks an einem Flugzeug unabhängig von der einzubauenden Position auf der einen oder der anderen Flugzeugseite auf einfache Weise durchführbar.

Es ist vorteilhaft, wenn Leitungen der Fluidbereiche innerhalb einer Stützstrebe angeordnet sind, welche üblicherweise im Wesentlichen in radialer Richtung durch einen Nebenstromkanal des Strahltriebwerks verläuft. Beispielsweise können drei bis 36 solcher Stützstreben umfangsseitig im Wesentlichen gleichverteilt angeordnet sein. Für die unterschiedlichen Fluidbereiche ist es zweckdienlich, wenn deren Leitungen durch zumindest zwei der Stützstreben verlaufen. Die Anbindung und Schnittstelleneinrichtung zum Flugzeug hin kann ebenfalls vorteilhaft im Umfangsbereich wenigstens einer Stützstrebe angeordnet sein, wobei die Betriebsmittel der Fluidbereiche führenden Leitungen in diesen Stützstreben oder in Stützstreben wenigstens annähernd symmetrisch hierzu angeordnet sein können.

Bei jeder Winkelbeziehung zwischen den Triebwerksbefestigungspunkten, der Anzahl der Streben in Verbindung mit der Antriebswelle, Rücklaufleitungen, Entlüftungsleitungen und Triebwerkshebepunkten sollte deren Anzahl und Positionierung so gewählt sein, dass eine exakte Spiegelung bei einem Links-/Rechtsaustausch am Flugzeug mit entsprechendem Wechsel von Funktionalität Hardware möglich ist.

Die Anzahl der verwendeten Stützstreben ist vorzugsweise in Abhängigkeit eines vorliegenden Anbindungswinkels des Strahltriebwerks, d. h. eines Winkels, den die Schnittstelleneinrichtung des Strahltriebwerks gegenüber einer Vertikalen aufspannt, gewählt, wobei ein Anbindungswinkel zwischen 0° und 135° ausgehend von einer sogenannten Top-Dead-Position hierdurch weitgehend abdeckbar ist. Dabei ist insbesondere ein Strahltriebwerk mit einem positiven Anbindungswinkel gegenüber einer Vertikalen auf einer ersten Seite eines Flugzeugs beispielsweise an einem Flugzeugrumpf anbindbar und ein weiteres Strahltriebwerk mit einem entsprechenden negativen Anbindungswinkel auf einer zweiten Seite des Flugzeugs anbindbar.

Um den angestrebten Anbindungswinkel ebenfalls einstellen zu können, kann der Fachmann die Stützstreben gegebenenfalls auch ungleichmäßig über dem Umfang des Strahltriebwerks verteilt anordnen.

Es wird weiterhin ein Flugzeug mit einem derartigen Strahltriebwerk vorgeschlagen, das eine radial äußere Triebwerksverkleidung, eine sogenannte Nacelle, und eine mehrere Hilfsgeräte aufweisende Hilfsgerätegetriebeeinrichtung aufweist, die von einer Welle antreibbar ist, die mit einer um eine Zentralachse rotierenden Triebwerkswelle wirkverbunden ist, beispielsweise einer flexiblen Antriebswelle, wobei die Hilfsgerätegetriebeeinrichtung in radialer Richtung des Strahltriebwerks im Wesentlichen außerhalb der äußeren Triebwerksverkleidung des Strahltriebwerks angeordnet ist.

Durch die Anordnung der Hilfsgerätegetriebeeinrichtung weitgehend oder vollständig außerhalb der Triebwerksverkleidung bzw. des Nacellebauraums kann ein Strahltriebwerk auf besonders einfache Weise flexibel an einem Flugzeug angeordnet werden. Zudem kann auf diese Weise eine Querschnittsfläche des Strahltriebwerks gegenüber einer Ausführung, bei dem die Hilfsgerätegetriebeeinrichtung innerhalb der Triebwerksverkleidung angeordnet ist, deutlich reduziert werden. Hierdurch ist wiederum auch eine Länge des Strahltriebwerks reduzierbar, so dass ein aerodynamischer Widerstand des Strahltriebwerks und somit auch des Flugzeugs vorteilhaft gering ist und ein erfindungsgemäß ausgeführtes Flugzeug einen geringen Kraftstoffverbrauch aufweist.

Durch die reduzierte Querschnittsgestaltung des Strahltriebwerks ergeben sich Vorteile sowohl bei konventionellen Flugzeugen als auch bei Überschallflugzeugen.

Das Eigengewicht eines Strahltriebwerks eines erfindungsgemäßen Flugzeugs mit beispielsweise in einen Pylon oder direkt in den Flugzeugrumpf ausgelagerter Hilfsgerätegetriebeeinrichtung ist gegenüber herkömmlichen Strahltriebwerken mit integrierter Hilfsgerätegetriebeeinrichtung deutlich reduziert, womit auch die Triebwerksbelastung reduziert wird. Strukturelle Komponenten können dabei leichter mit geringerem Gewicht ausgelegt werden, so dass in Schadensfällen mit Unwuchtzustand, beispielsweise bei einem "Fan Blade Off"-Zustand nach einem Schaufelabbruch, die auftretenden Unwuchtigkeiten entsprechend geringer sind.

Weiterhin kann die Hilfsgerätegetriebeeinrichtung in einem Bereich angeordnet werden, in dem gegenüber der Anordnung innerhalb der äußeren Triebwerkshülle verbesserte Temperatur- und Vibrationsbedingungen vorliegen. Hierdurch sind erhöhte Standzeiten von Hilfsgerätegetriebeeinrichtungen erzielbar.

Bei einer Weiterbildung der Erfindung kann die Hilfsgerätegetriebeeinrichtung an eine Rahmeneinrichtung, insbesondere einen sogenannten Spaceframe, angebunden sein, die einerseits direkt mit der entsprechenden Flugzeugkomponente wie dem Flugzeugrumpf und/oder einem Flugzeugflügel verbunden ist und andererseits vorzugsweise mit der Anbindungsvorrichtung des Strahltriebwerks verbunden ist. Die Rahmeneinrichtung kann dabei ein mit der Hilfsgerätegetriebeeinrichtung vormontierbares Modul darstellen, das Schnittstellen zu dem Strahltriebwerk und zu dem Flugzeug aufweisen kann.

Bei einer vorteilhaften Ausführung eines erfindungsgemäßen Flugzeugs ist die Rahmeneinrichtung zumindest teilweise innerhalb eines dem Strahltriebwerk zugeordneten Triebwerkspylonen angeordnet, so dass die Rahmeneinrichtung und die Hilfsgerätegetriebeeinrichtung aerodynamisch günstig positioniert sind.

Um eine Montage der Hilfsgeräteeinrichtung an die Rahmeneinrichtung zu erleichtern, kann die Rahmeneinrichtung Anbindungselemente für die Hilfsgeräte, Leitungen, Rohre und/oder Kabelstränge aufweisen.

Die Hilfsgerätegetriebeeinrichtung ist bei einer bauraumgünstigen Ausführung der Erfindung zumindest teilweise innerhalb des Flugzeugrumpfes und/oder eines Pylonen und/oder eines Flugzeugflügels, insbesondere im Anbindungsbereich des Strahltriebwerks an den Flugzeugrumpf oder den Flugzeugflügel, angeordnet.

Die Antriebswelle der Hilfsgerätegetriebeeinrichtung kann durch eine Stützstrebe des Strahltriebwerks verlaufen, in deren Bereich das Strahltriebwerk an den Triebwerkspylon, den Flugzeugrumpf oder den Flugzeugflügel angebunden ist.

Sowohl die in den Patentansprüchen angegebenen Merkmale als auch die in dem nachfolgenden Ausführungsbeispiel des erfindungsgemäßen Strahltriebwerks bzw. des erfindungsgemäßen Flugzeugs angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Strahltriebwerks bzw. des erfindungsgemäßen Flugzeugs ergeben sich aus den Patentansprüchen und aus dem nachfolgend unter Bezugnahme auf die Zeichnung prinzipmäßig beschriebenen Ausführungsbeispiel.

Es zeigt:
- Fig. 1: eine vereinfachte dreidimensionale Ansicht eines Flugzeugs mit im Heckbereich an einem Flugzeugrumpf angeordneten Strahltriebwerken;
- Fig. 2: eine vereinfachte Längsschnittansicht eines Strahltriebwerks des Flugzeugs gemäß Fig. 1, wobei eine Anbindung des Strahltriebwerks an den Flugzeugrumpf ersichtlich ist;
- Fig. 3: eine stark schematisierte Querschnittdarstellung eines Strahltriebwerks der Fig. 2 des Flugzeugs gemäß Fig. 1 in Alleinstellung;
- Fig. 4: eine weitere stark schematisierte Schnittdarstellung eines Strahltriebwerks des Flugzeugs gemäß Fig. 1 in Alleinstellung;
- Fig. 5: eine prinzipmäßige Vorderansicht des Strahltriebwerks gemäß Fig. 3 und Fig. 4 in einer auf einer ersten Flugzeugseite installierten ersten Montageposition; und
- Fig. 6: eine Ansicht des Strahltriebwerks gemäß Fig. 5 in einer auf einer zweiten Flugzeugseite installierten zweiten Montageposition.

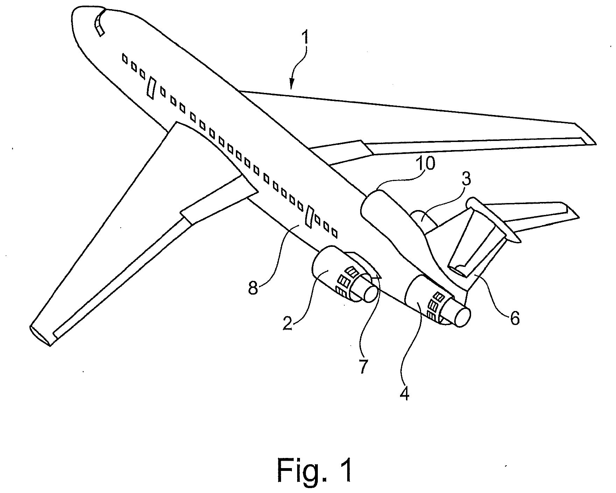

Bezug nehmend auf Fig. 1 ist ein Passagier-Flugzeug 1 gezeigt, das von drei Strahltriebwerken 2, 3, 4 antreibbar ist. Das erste Strahltriebwerk 2 ist auf einer linken Flugzeugseite im Heckbereich des Flugzeugs 1, im Bereich eines vertikalen Stabilisators 6 angeordnet und im Bereich eines Triebwerkspylon 7 an einen Flugzeugrumpf 8 angebunden. Das zweite Strahltriebwerk 3 ist im Wesentlichen spiegelsymmetrisch auf einer rechten Flugzeugseite mit dem Flugzeugrumpf 8 verbunden.

Das dritte Strahltriebwerk 4 ist am hinteren Ende des Flugzeugrumpfes 8 positioniert und an einer inneren Rumpfstrebe angebracht, die unterhalb des vertikalen Stabilisators 6 des Flugzeugs 1 angeordnet ist. Zur Zuführung von Luft zu dem dritten Strahltriebwerk 4 ist ein Lufteinlass 10 vorgesehen, der in Flugrichtung vor dem vertikalen Stabilisator 6 auf einer Oberseite des Flugzeugrumpfes 8 angeordnet ist und innerhalb des Flugzeugrumpfes 8 mit dem dritten Strahltriebwerk 4 verbunden ist.

Grundsätzlich sind vielfältige Anordnungen von Strahltriebwerken an einem Flugzeug möglich, wobei ein Strahltriebwerk neben den gezeigten Positionen beispielsweise auch im Bereich eines Flugzeugflügels, unterhalb oder oberhalb desselben, angeordnet sein kann.

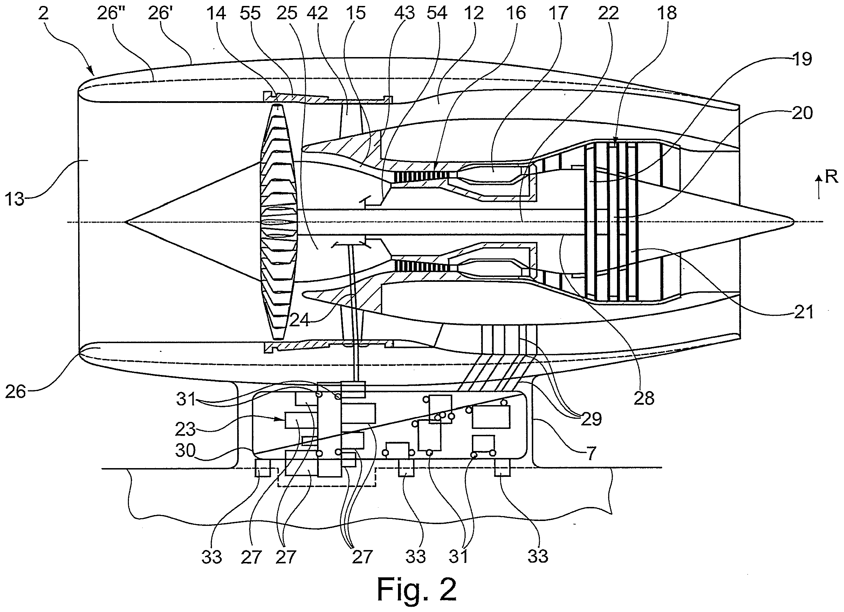

Das Strahltriebwerk 2 ist in Fig. 2 in einer Längsschnittansicht gezeigt und mit einem Nebenstromkanal 12 und einem Einlaufbereich 13 ausgebildet, wobei sich an den Einlaufbereich 13 stromab ein Bläser 14 in an sich bekannter Art und Weise anschließt. Wiederum stromab des Bläsers 14 teilt sich der Fluidstrom im Strahltriebwerk 2 in einen Nebenstrom und einen Kernstrom auf, wobei der Nebenstrom durch den Nebenstromkanal 12 und der Kernstrom in einen Triebwerkskern 15 bzw. Kernstromkanal strömt, der wiederum in an sich bekannter Art und Weise mit einer Verdichtereinrichtung 16, einem Brenner 17 und einer Turbineneinrichtung 18 ausgeführt ist. Die Turbineneinrichtung 18 weist vorliegend drei Rotorvorrichtungen 19, 20 und 21 auf, die um eine Zentralachse 22 drehbar gelagert sind.

Bei der Ausführung des Strahltriebwerks 2 gemäß Fig. 2 ist eine Hilfsgerätegetriebeeinrichtung 23 bzw. Nebenaggregategetriebeeinrichtung in radialer Richtung des Strahltriebwerks 2 außerhalb eines eine äußere Triebwerksverkleidung bildenden Nacellebauraums 26 angeordnet. Die Hilfsgerätegetriebeeinrichtung 23 ist vorliegend über eine im Wesentlichen in radialer Richtung des Strahltriebwerks 2 verlaufende Antriebswelle 24 antreibbar, die hier über ein Kegelradgetriebe 25 mit einer um die Zentralachse 22 drehenden Triebwerkswelle, hier einer Hochdruckwelle 54, des Strahltriebwerks 2 verbunden ist. Die verschiedene Nebenaggregate 27, wie beispielsweise einen Starter, einen Generator, einen Ölabscheider oder dergleichen aufweisende Hilfsgerätegetriebeeinrichtung 23 wird somit im Betrieb des Strahltriebwerks 2 von der Hochdruckwelle 54 angetrieben bzw. mit Drehmoment versorgt.

In Fig. 2 ist weiter ersichtlich, dass die Hilfsgerätegetriebeeinrichtung 23 innerhalb des Triebwerkspylonen 7 angeordnet ist, wobei ebenfalls Leitungen 29 ersichtlich sind, mittels denen die Nebenaggregate 27 mit dem Strahltriebwerk 2 in Verbindung stehen.

Innerhalb des Triebwerkspylonen 7 ist eine Rahmeneinrichtung 30, ein sogenanntes Spaceframe, angeordnet, an der neben den Nebenaggregaten 27 der Hilfsgerätegetriebeeinrichtung 23 auch Leitungen, Rohre und Kabelstränge mittels schematisch gezeigter Anbindungselemente 31 anbindbar sind. Die Rahmeneinrichtung 30 ist insbesondere mit einer Gitterstruktur ausgeführt, die in Abhängigkeit der anzuordnenden Elemente anpassbar ist.

Der Fig. 2 ist weiterhin zu entnehmen, dass vorliegend drei Verbindungseinrichtungen 33 vorgesehen sind, mittels denen die Rahmeneinrichtung 30 an dem Flugzeugrumpf 8 oder gegebenenfalls an einem Flugzeugflügel angebunden ist. In weiteren Ausführungen können auch zwei oder mehr als drei Verbindungseinrichtungen vorgesehen sein.

Durch die Anordnung der Hilfsgerätegetriebeeinrichtung 23 mit den Nebenaggregaten 27 im Wesentlichen außerhalb des Nacellebauraums 26 ist dieser gegenüber einem mit einer durchgezogenen Linie 26' gezeigten Querschnitt, wie er bei Anordnung der Hilfsgerätegetriebeeinrichtung innerhalb des Nacellebauraums 26 vorzusehen wäre, auf einen mit gestrichelter Linie 26" gezeigten Querschnitt reduzierbar.

Durch die Anordnung der Hilfsgerätegetriebeeinrichtung 23 außerhalb des Nacellebauraums 26 ist auch eine Länge des Strahltriebwerks 2 reduzierbar, so dass ein aerodynamischer Widerstand des Strahltriebwerks 2 und somit auch des Flugzeugs 1 vorteilhaft gering ist und das Flugzeug 1 einen vorteilhaft geringen Kraftstoffverbrauch aufweist. Zudem ist die Hilfsgerätegetriebeeinrichtung 23 hierdurch günstigeren Temperatur- und Vibrationsbedingungen ausgesetzt, so dass die Hilfsgerätegetriebeeinrichtung 23 eine hohe Lebensdauer aufweist.

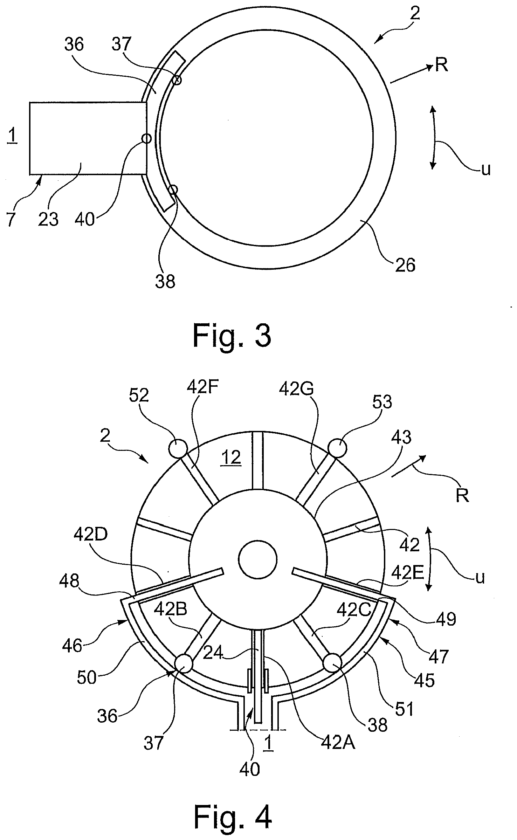

In Fig. 3 bis Fig. 6 sind stark vereinfachte Querschnittsdarstellungen des Strahltriebwerks 2 im Bereich des Triebwerkspylonen 7 mit der Hilfsgerätegetriebeeinrichtung 23 gezeigt.

In Fig. 3 ist eine schematisch dargestellte Anbindungsvorrichtung 36 gezeigt, die vorliegend zwei Triebwerksbefestigungspunkte 37, 38 aufweist, mittels denen die Anbindungsvorrichtung 36 vorliegend mit einem Bläsergehäuse 55 verbunden ist. Die Anbindungsvorrichtung 36 weist weiterhin eine Schnittstelleneinrichtung 40 auf, mittels der die Anbindungsvorrichtung 36 vorliegend mit der Rahmeneinrichtung 30 und somit mit dem Flugzeugrumpf 8 verbunden ist. Alternativ kann die Schnittstelle auch am Pylon oder direkt am Flugzeugrumpf vorgesehen sein.

Wie Fig. 4 zu entnehmen ist, in der das Strahltriebwerk 2 in einer "neutralen" Lage, d. h. nicht in Anbaulage dargestellt ist, sind sowohl die Schnittstelleneinrichtung 40 als auch die Triebwerksbefestigungspunkte 37, 38 hier in Umfangsrichtung U des Strahltriebwerks 2 jeweils im Bereich einer Stützstrebe 42 angeordnet, wobei sich die Stützstreben 42 in radialer Richtung R des Strahltriebwerks 2 durch den Nebenstromkanal 12 erstrecken und das Bläsergehäuse 55 mit einem Zwischengehäuse 43 verbinden. Vorliegend sind in Umfangsrichtung U gleichverteilt zehn Stützstreben 42 vorgesehen. Die Anzahl kann jedoch auch mehr oder weniger betragen und beispielsweise zwischen 4 und 28 oder mehr variieren.

Der Schnittstelleneinrichtung zum Flugzeug 1 hin ist im Bereich einer Stützstrebe 42A angeordnet. An den beidseits benachbarten Stützstreben 42B und 42C sind die Triebwerksbefestigungspunkte 37 und 38 vorgesehen, welche somit im Wesentlichen symmetrisch zu der Schnittstelleneinrichtung 40 angeordnet sind, wobei ein in Umfangsrichtung U betrachteter Winkel zwischen den Triebwerksbefestigungspunkten 37, 38 vorliegend 72° beträgt. In Fig. 4 bis Fig. 6 ist zudem jeweils die Antriebswelle 24 der hier nicht näher dargestellten Hilfsgerätegetriebeeinrichtung 23 im Bereich der zu der Schnittstelleneinrichtung 40 führenden Stützstrebe 42A ersichtlich.

In Fig. 4 bis Fig. 6 ist weiterhin ausschnittsweise eine als Hydraulikeinrichtung 45 ausgeführte Betriebsmitteleinrichtung gezeigt, wobei die Hydraulikeinrichtung 45 zwei Fluidbereiche 46, 47 aufweist. Jeder der spiegelbildlichen Fluidbereiche 46, 47 ist dabei so ausgelegt, dass er wahlweise sowohl zur Entlüftung (vent) als auch zur Ölab- und Ölrückführung (drain/scavenge) genutzt werden kann. Leitungsbereiche 48, 49 der Fluidbereiche 46, 47 verlaufen jeweils durch Stützstreben 42D und 42E von dem Zwischengehäuse 43 in Richtung des Bläsergehäuses 55, der Gondel bzw. im Nacellebauraum 26 in Umfangsrichtung U zur Schnittstelleneinrichtung 40 hin erstreckt.

Die die Leitungsbereiche 48, 49 aufnehmenden Stützstreben 42D und 42E sind wiederum symmetrisch zu der der Schnittstelleneinrichtung 40 zugeordneten Stützstrebe 42A und somit zu der Schnittstelleneinrichtung 40 angeordnet, wobei ein in Umfangsrichtung U betrachteter Winkel zwischen den Leitungsbereichen 48, 49 vorliegend 144° beträgt.

Im Bereich weiterer Stützstreben 42F und 42G sind weiterhin Hebepunkte 52, 53 angeordnet, welche mit entsprechenden Befestigungsmitteln ausgebildet sind und an denen das Strahltriebwerk 2 zur Montage an dem Flugzeug 1 gehalten werden kann. Die Stützstreben 42F und 42G verlaufen dabei wiederum symmetrisch zur Schnittstelleneinrichtung 40 und spiegelbildlich zu den Stützstreben 42B, 42C der Triebwerksbefestigungspunkte 37, 38.

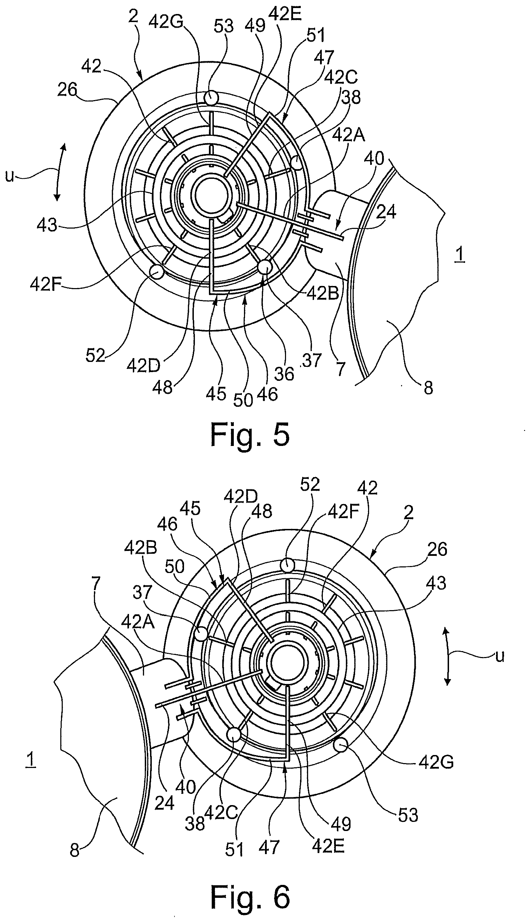

Der Abstand zwischen den Stützstreben, welche Triebwerksbefestigungspunkte, Leitungen der Fluidbereiche und Hebepunkte aufnehmen, variiert selbstverständlich mit der Gesamtzahl der Stützstreben. So ist beispielsweise ein in Umfangsrichtung U betrachteter Winkel zwischen den Hebepunkten 52, 53 bei der Ausführung gemäß Fig. 4 72°, wohingegen der Winkel bei der Ausführung gemäß Fig. 5 und Fig. 6 144° beträgt.

In Fig. 5 und Fig. 6 ist das Strahltriebwerk 2 in einer ersten Montageposition und in einer hiervon abweichenden zweiten Montageposition am Flugzeug 1 gezeigt, wobei das Strahltriebwerk 2 in Fig. 5 in einer Montageposition auf der rechten Flugzeugseite und in der Fig. 6 um 144° verschwenkt in einer Montageposition auf der linken Flugzeugseite gezeigt ist. Der bei der rechtsseitigen Montage des Strahltriebwerks 2 gemäß Fig. 5 der Entlüftung dienende Fluidbereich 46 wird bei linksseitiger Montage gemäß Fig. 6 zum Ölrücklauf, während der bei der rechtsseitigen Montage dem Ölrücklauf dienende Fluidbereich 47 bei der linksseitigen Montage zur Entlüftung dient.

Wie aus einem Vergleich der Fig. 4 und Fig. 5 hervorgeht, ist die Anordnung des Strahltriebwerks 2 auf der rechten Flugzeugseite gegenüber der Anordnung des Strahltriebwerks 2 auf der linken Flugzeugseite im Wesentlichen spiegelbildlich zu einer Flugzeuglängsmittelebene ausgeführt, wobei die Hebepunkte 52, 53, die Leitungsbereiche 47, 48 und die Triebwerksbefestigungspunkte 37, 38 jeweils eine zueinander vertauschte Position einnehmen und die Funktionalitäten der Fluidbereiche 46, 47 vertauscht sind.

Es können somit grundsätzlich baugleich ausgeführte Strahltriebwerke eingesetzt werden, um diese auf verschiedenen Seiten des Flugzeugs 1 mit voneinander abweichenden Anbindungswinkeln an dem Flugzeug 1 anzubinden.

### Bezugszeichenliste

- 1: Flugzeug
- 2, 3, 4: Strahltriebwerk
- 6: vertikaler Stabilisator
- 7: Triebwerkspylon
- 8: Flugzeugrumpf
- 10: Lufteinlass
- 12: Nebenstromkanal
- 13: Einlaufbereich
- 14: Bläser
- 15: Triebwerkskernstromkanal
- 16: Verdichtereinrichtung
- 17: Brenner
- 18: Turbineneinrichtung
- 19, 20, 21: Rotorvorrichtung
- 22: Zentralachse
- 23: Hilfsgerätegetriebeeinrichtung
- 24: Antriebswelle
- 25: Kegelradgetriebe
- 26: Nacellebauraum
- 27: Nebenaggregate
- 28: Triebwerkswelle, Niederdruckwelle
- 29: Leitungen
- 30: Rahmeneinrichtung
- 31: Anbindungselemente
- 33: Verbindungseinrichtung
- 36: Anbindungsvorrichtung
- 37, 38: Triebwerksbefestigungspunkt
- 40: Schnittstelleneinrichtung
- 42, 42A bis G: Stützstrebe
- 43: Zwischengehäuse
- 45: Betriebsmitteleinrichtung; Hydraulikeinrichtung
- 46,47: Fluidbereich
- 48, 49: Leitungsbereich
- 50, 51: weiterer Leitungsbereich
- 52,53: Hebepunkt
- 54: Triebwerkswelle, Hochdruckwelle
- 55: Tragstruktur, Bläsergehäuse
- R: radiale Richtung des Strahltriebwerks
- U: Umfangsrichtung des Strahltriebwerks

## Patentansprüche

1. Strahltriebwerk (2, 3, 4) mit einer Anbindungsvorrichtung (36) und mit wenigstens einer Betriebsmitteleinrichtung (45), welche einen ersten Fluidbereich (46) und einen zweiten Fluidbereich (47) aufweist, wobei das Strahltriebwerk (2, 3, 4) an einem Element (7, 8) eines Flugzeugs (1) wahlweise in einer ersten Montageposition und wenigstens einer zweiten Montageposition anbringbar ist, wobei der erste Fluidbereich (46) in der ersten Montageposition einer ersten Funktionalität und der zweite Fluidbereich (47) in der ersten Montageposition einer zweiten Funktionalität zugeordnet ist, **dadurch gekennzeichnet, dass** die Fluidbereiche (46, 47) in der zweiten Montageposition der jeweils anderen Funktionalität zugeordnet sind.

2. Strahltriebwerk nach Anspruch 1, **dadurch gekennzeichnet, dass** die Fluidbereiche (46, 47) als Funktionalitäten einer Rückführung und einer Entlüftung zugeordnet sind.

3. Strahltriebwerk nach Anspruch 1 oder 2, **dadurch gekennzeichnet, dass** die Fluidbereiche (46, 47) in Umfangsrichtung (U) des Strahltriebwerks (2, 3, 4) zueinander beabstandet angeordnete Leitungsbereiche (48, 49) aufweisen, wobei die Leitungsbereiche (48, 49) in Umfangsrichtung (U) des Strahltriebwerks (2, 3, 4) im Wesentlichen symmetrisch zu der Anbindungsvorrichtung (36) angeordnet sind.

4. Strahltriebwerk nach einem der Ansprüche 1 bis 3, **dadurch gekennzeichnet, dass** die Anbindungsvorrichtung (36) wenigstens zwei Triebwerksbefestigungspunkte (37, 38) aufweist, wobei die Anbindungsvorrichtung (36) im Bereich der Triebwerksbefestigungspunkte (37, 38) mit einem Bläsergehäuse (55) des Strahltriebwerks (2, 3, 4) verbunden ist.

5. Strahltriebwerk nach Anspruch 4, **dadurch gekennzeichnet, dass** die Anbindungsvorrichtung (40) in Umfangsrichtung vorzugsweise wenigstens annähernd mittig zu den zwei Triebwerksbefestigungspunkten (37, 38) eine Schnittstelleneinrichtung (40) zum Flugzeug (1) umfasst.

6. Strahltriebwerk nach einem der Ansprüche 1 bis 5, **dadurch gekennzeichnet, dass** in Umfangsrichtung (U) des Strahltriebwerks (2, 3, 4) verteilt wenigstens zwei zur Montage des Strahltriebwerks (2, 3, 4) ausgeführte Hebepunkte (52, 53) vorgesehen sind, wobei die Hebepunkte (52, 53) in Umfangsrichtung (U) vorzugsweise symmetrisch zu der Schnittstelleneinrichtung (40) angeordnet sind.

7. Strahltriebwerk nach einem der Ansprüche 1 bis 6, **dadurch gekennzeichnet, dass** mehrere Stützstreben (42; 42D, 42E) im Wesentlichen in radialer Richtung (R) durch einen Nebenstromkanal (12) des Strahltriebwerks (2, 3, 4) vorgesehen sind, wobei die Fluidbereiche (46, 47) innerhalb wenigstens einer Stützstrebe (42; 42D, 42E) verlaufen.

8. Flugzeug (1) mit einem Strahltriebwerk (2, 3, 4) nach einem der Ansprüche 1 bis 7, das eine radial äußere Triebwerksverkleidung (26) und eine mehrere Hilfsgeräte (27) aufweisende Hilfsgerätegetriebeeinrichtung (23) aufweist, die von einer Welle (24) antreibbar ist, die mit einer um eine Zentralachse (22) drehenden Triebwerkswelle (28, 54) wirkverbunden ist, wobei die Hilfsgerätegetriebeeinrichtung (23) in radialer Richtung (R) des Strahltriebwerks (2, 3, 4) im Wesentlichen außerhalb der äußeren Triebwerksverkleidung (26) des Strahltriebwerks (2, 3, 4) angeordnet ist.

9. Flugzeug nach Anspruch 8, **dadurch gekennzeichnet, dass** die Hilfsgerätegetriebeeinrichtung (23) an eine Rahmeneinrichtung (30) angebunden ist, die direkt mit einem Flugzeugrumpf (8) und/oder einem Flugzeugflügel verbunden ist.

10. Flugzeug nach Anspruch 9, **dadurch gekennzeichnet, dass** die Rahmeneinrichtung (30) zumindest teilweise innerhalb eines dem Strahltriebwerk (2, 3, 4) zugeordneten Triebwerkspylonen (7) angeordnet ist.

11. Flugzeug nach einem der Ansprüche 9 oder 10, **dadurch gekennzeichnet, dass** die Rahmeneinrichtung (30) Anbindungselemente (31) für die Hilfsgeräte (27), Leitungen (29), Rohre und/oder Kabelstränge aufweist.

12. Flugzeug nach einem der Ansprüche 8 bis 11, **dadurch gekennzeichnet, dass** die Hilfsgerätegetriebeeinrichtung (23) zumindest teilweise innerhalb eines Flugzeugrumpfes (8) und/oder Triebwerkspylonen und/oder Flugzeugflügels angeordnet ist.

13. Flugzeug nach einem der Ansprüche 8 bis 12, **dadurch gekennzeichnet, dass** die die Hilfsgerätegetriebeeinrichtung (23) antreibende Welle (24) durch eine Stützstrebe (42; 42B) des Strahltriebwerks (2, 3, 4) verläuft, in deren Bereich das Strahltriebwerk (2, 3, 4) an den Triebwerkspylon (7), den Flugzeugrumpf (8) oder den Flugzeugflügel angebunden ist.

## Claims

1. Jet engine (2, 3, 4) having a connection apparatus (36) and having at least one operating medium device (45) which has a first fluid region (46) and a second fluid region (47), wherein the jet engine (2, 3, 4) is attachable to an element (7, 8) of an aircraft (1) either in a first installation position or in at least one second installation position, wherein, in the first installation position, the first fluid region (46) is assigned to a first functionality and, in the first installation position, the second fluid region (47) is assigned to a second functionality, **characterized in that**, in the second installation position, the fluid regions (46, 47) are assigned to the respective other functionality.

2. Jet engine according to Claim 1, **characterized in that** the fluid regions (46, 47) are assigned as functionalities to scavenging and venting.

3. Jet engine according to Claim 1 or 2, **characterized in that** the fluid regions (46, 47) have conduit regions (48, 49) arranged spaced apart from one another in the circumferential direction (U) of the jet engine (2, 3, 4), wherein the conduit regions (48, 49) are arranged substantially symmetrically to the connection apparatus (36) in the circumferential direction (U) of the jet engine (2, 3, 4).

4. Jet engine according to one of Claims 1 to 3, **characterized in that** the connection apparatus (36) has at least two engine attachment points (37, 38), wherein the connection apparatus (36) is connected in the region of the engine attachment points (37, 38) to a fan housing (55) of the jet engine (2, 3, 4).

5. Jet engine according to Claim 4, **characterized in that** the connection apparatus (40) comprises an interface device (40) to the aircraft (1) preferably at least approximately centrally in the circumferential direction with respect to the two engine attachment points (37, 38).

6. Jet engine according to one of Claims 1 to 5, **characterized in that** at least two lifting points (52, 53) designed for the installation of the jet engine (2, 3, 4) are provided in a manner distributed in the circumferential direction (U) of the jet engine (2, 3, 4), wherein the lifting points (52, 53) are preferably arranged symmetrically with respect to the interface device (40) in the circumferential direction (U).

7. Jet engine according to one of Claims 1 to 6, **characterized in that** a plurality of supporting struts (42; 42D, 42E) are provided substantially in the radial direction (R) through a bypass duct (12) of the jet engine (2, 3, 4), wherein the fluid regions (46, 47) run inside at least one supporting strut (42; 42D, 42E).

8. Aircraft (1) with a jet engine (2, 3, 4) according to one of Claims 1 to 7, which has a radially outer engine cowling (26) and an auxiliary unit transmission device (23) which has a plurality of auxiliary units (27) and can be driven by a shaft (24) which is operatively connected to an engine shaft (28, 54) which rotates about a central axis (22), wherein the auxiliary unit transmission device (23) is arranged substantially outside the outer engine cowling (26) of the jet engine (2, 3, 4) in the radial direction (R) of the jet engine (2, 3, 4).

9. Aircraft according to Claim 8, **characterized in that** the auxiliary unit transmission device (23) is connected to a frame device (30) which is connected directly to an aircraft fuselage (8) and/or to an aircraft wing.

10. Aircraft according to Claim 9, **characterized in that** the frame device (30) is at least partially arranged inside an engine pylon (7) which is assigned to the jet engine (2, 3, 4).

11. Aircraft according to either of Claims 9 and 10, **characterized in that** the frame device (30) has connection elements (31) for the auxiliary units (27), conduits (29), tubes and/or cable harnesses.

12. Aircraft according to one of Claims 8 to 11, **characterized in that** the auxiliary unit transmission device (23) is at least partially arranged inside an aircraft fuselage (8) and/or engine pylon and/or aircraft wing.

13. Aircraft according to one of Claims 8 to 12, **characterized in that** the shaft (24) driving the auxiliary unit transmission device (23) runs through a supporting strut (42; 42B) of the jet engine (2, 3, 4), in the region of which supporting strut the jet engine (2, 3, 4) is connected to the engine pylon (7), to the aircraft fuselage (8) or to the aircraft wing.

## Revendications

1. Turboréacteur (2, 3, 4) comprenant un dispositif de raccordement (36) et au moins une installation de carburant (45) qui comporte une première zone de fluide (46) et une deuxième zone de fluide (47), le turboréacteur (2, 3, 4) pouvant être fixé à un élément (7, 8) d'un aéronef (1) au choix dans une première position de montage et au moins une deuxième position de montage, la première zone de fluide (46) étant associée dans la première position de montage à une première fonctionnalité et la deuxième zone de fluide (47) étant associée dans la première position de montage à une deuxième fonctionnalité, **caractérisé en ce que** les zones de fluide (46, 47) dans la deuxième position de montage sont associées à l'autre fonctionnalité respective.

2. Turboréacteur selon la revendication 1, **caractérisé en ce que** les zones de fluide (46, 47) sont associées comme fonctionnalités à une recirculation et une ventilation.

3. Turboréacteur selon la revendication 1 ou 2, **caractérisé en ce que** les zones de fluide (46, 47) comportent des zones de conduite (48, 49) disposées à distance les unes des autres dans la direction circonférentielle (U) du turboréacteur (2, 3, 4), les zones de conduite (48, 49) étant disposées de manière sensiblement symétrique au dispositif de raccordement (36) dans la direction circonférentielle (U) du turboréacteur (2,3,4).

4. Turboréacteur selon l'une des revendications 1 à 3, **caractérisé en ce que** le dispositif de raccordement (36) comporte au moins deux points de fixation de turboréacteur (37, 38), le dispositif de raccordement (36) étant relié à un boîtier de soufflante (55) du turboréacteur (2, 3, 4) au niveau des points de fixation de turboréacteur (37, 38).

5. Turboréacteur selon la revendication 4, **caractérisé en ce que** le dispositif de raccordement (40) comprend une installation d'interface (40) avec l'aéronef (1) de préférence au moins à peu près au centre par rapport aux deux points de fixation de turboréacteur (37, 38) dans la direction circonférentielle.

6. Turboréacteur selon l'une des revendications 1 à 5, **caractérisé en ce qu'**au moins deux points de levage (52, 53), destinés au montage du turboréacteur (2, 3, 4), sont prévus de manière répartie dans la direction circonférentielle (U) du turboréacteur (2, 3, 4), les points de levage (52, 53) étant disposés de préférence symétriquement par rapport au dispositif d'interface (40) dans la direction circonférentielle (U).

7. Turboréacteur selon l'une des revendications 1 à 6, **caractérisé en ce qu'**une pluralité de montants de support (42 ; 42D, 42E) sont prévus sensiblement dans la direction radiale (R) à travers un conduit de deuxième flux (12) du turboréacteur (2, 3, 4), les zones de fluide (46, 47) s'étendant à l'intérieur d'au moins une entretoise de support (42 ; 42D, 42E).

8. Aéronef (1) comprenant un turboréacteur (2, 3, 4) selon l'une des revendications 1 à 7, qui comporte un carénage radialement extérieur (26) et une installation de transmission d'unités auxiliaires (23) qui comporte une pluralité d'unités auxiliaires (27) et qui peut être entraînée par un arbre (24) qui est fonctionnellement relié à un arbre de turboréacteur (28, 54) tournant sur un axe central (22), l'installation de transmission d'unités auxiliaires (23) étant disposée sensiblement à l'extérieur du carénage extérieur (26) du turboréacteur (2, 3, 4) dans la direction radiale (R) du turboréacteur (2, 3, 4).

9. Aéronef selon la revendication 8, **caractérisé en ce que** l'installation de transmission d'unités auxiliaires (23) est raccordée à une installation de châssis (30) qui est directement reliée à un fuselage d'aéronef (8) et/ou une aile d'aéronef.

10. Aéronef selon la revendication 9, **caractérisé en ce que** l'installation de châssis (30) est disposée au moins partiellement à l'intérieur d'un mât de turboréacteur (7) associé au turboréacteur (2, 3, 4).

11. Aéronef selon l'une des revendications 9 ou 10, **caractérisé en ce que** l'installation de châssis (30) comporte des éléments de raccordement (31) destinés aux unités auxiliaires (27), à des conduites (29), des tubes et/ou des faisceaux de câbles.

12. Aéronef selon l'une des revendications 8 à 11, **caractérisé en ce que** l'installation de transmission d'unités auxiliaires (23) est disposée au moins partiellement à l'intérieur d'un fuselage d'aéronef (8) et/ou de mâts de turboréacteur et/ou d'une aile d'aéronef.

13. Aéronef selon l'une des revendications 8 à 12, **caractérisé en ce que** l'arbre (24) entraînant l'installation de transmission d'unités auxiliaires (23) s'étend à travers un montant de support (42 ; 42B) du turboréacteur (2, 3, 4) dans la zone duquel le turboréacteur (2, 3, 4) est raccordé au mât de turboréacteur (7), au fuselage d'aéronef (8) ou à l'aile d'aéronef.
